# EUROPEAN PATENT APPLICATION

(11) **EP 4 682 795 A1**
(43) Date of publication of application: **21.01.2026**
(21) Application number: 23927118.2
(22) Date of filing: 01.11.2023
(51) Int. Cl.: G06Q 10/083, G06Q 10/087, G06Q 30/0601

(54) **ARTICLE DISTRIBUTION METHOD, AND APPARATUS**

(30) Priority: 15.03.2023 CN 202310268750
(71) Applicant: Beijing Jingdong Zhenshi Information Technology Co., Ltd., Beijing 100086 (CN)
(72) Inventor: JIANG, Li, Beijing 100086 (CN); SHI, Yongquan, Beijing 100086 (CN); ZHOU, Yiru, Beijing 100086 (CN)
(74) Representative: Böckmann genannt Dallmeyer, Georg Nikolas
(86) International application number: PCT/CN2023/128959
(87) International publication number: WO 2024/187777

(57) **Abstract**

The disclosure relates to an article distribution method and apparatus. A specific implementation of the method comprises acquiring a distribution task, and performing matching to obtain first terminal information and second terminal information corresponding to the distribution task; reading a grouping rule of the distribution task, dividing a plurality of pieces of article information bound to the distribution task into a plurality of sets, and performing estimation in accordance with the article information included in each set to obtain corresponding volume information; performing screening to obtain capacity information corresponding to bin information in a specified state in the second terminal information, performing matching to obtain the capacity information corresponding to each piece of volume information, and binding the corresponding set and the bin information; generating a corresponding instruction in accordance with each set, and sending the instruction to a first terminal corresponding to the first terminal information so as to perform processing of corresponding articles of the set by the first terminal.

## Description

### CROSS-REFERENCE TO RELATED APPLICATIONS

This application claims priority to Chinese Patent Application No. 202310268750.6, which was filed on March 15, 2023, and the content of which is hereby incorporated by reference in its entirety.

### TECHNICAL FIELD

The disclosure relates to the fields of logistics and computer technology, and in particular relates to an article distribution method and apparatus.

### BACKGROUND

At present, the express logistics industry is booming, which brings a new consumption experience to users.

In the process of implementing the disclosure, the inventors found at least the following problems in the prior art:
While the users are enjoying convenient and efficient online ordering services, the express logistics industry is facing a tremendous business pressure of sorting goods. The traditional article distribution method is to pick articles corresponding to one order at a time, and the distribution dimensions are fixed, so the efficiency is comparatively low. The operating system for automatic article distribution in the prior art can hardly be modified because the distribution dimensions thereof are defined at the code level, so there are technical problems of repeated development, difficulty in modifying distribution configurations, low flexibility, and high operation and maintenance costs.

### SUMMARY

In view of this, the embodiments of the disclosure provide an article distribution method and apparatus, which can solve the technical problems that the existing article distribution method can hardly be configured and have low flexibility.

According to one aspect of the embodiments of the disclosure, an article distribution method is provided, the method comprising acquiring a distribution task, and performing matching to obtain first terminal information and second terminal information corresponding to the distribution task; reading a grouping rule of the distribution task, grouping a plurality of pieces of article information bound to the distribution task to obtain a plurality of sets, and performing estimation in accordance with the article information included in each set to obtain volume information corresponding to each set; performing screening to obtain bin information in a specified state in the second terminal information to thereby obtain capacity information corresponding to the bin information, and performing matching to obtain the capacity information corresponding to each piece of volume information so as to bind the corresponding set and the bin information; performing querying to obtain article storage information corresponding to each set and the bin information bound thereto, generating a corresponding article transportation instruction, and sending the instruction to a first terminal corresponding to the first terminal information so as to perform processing of corresponding articles of the set by the first terminal.

According to one or more aspects of the disclosure, before the step of acquiring a distribution task, the method comprises: receiving order information, and newly creating the corresponding distribution task so as to bind a plurality of pieces of article information corresponding to the order information to the distribution task; determining the grouping rule of the distribution task in accordance with a type identifier of the order information, if the type identifier is a preset first identifier, determining the grouping rule to be an order dimension, if the type identifier is a preset second identifier, determining the grouping rule to be an order destination dimension, if the type identifier is a preset third identifier, reading text information of a specified area in the order information as the grouping rule, and if the type identifier is a preset fourth identifier, determining the grouping rule to be an article number dimension.

According to one or more aspects of the disclosure, the step of performing matching to obtain first terminal information and second terminal information corresponding to the distribution task comprises: performing screening to obtain any first terminal information in an idle state, and binding the distribution task to the first terminal information; reading the article information included in the distribution task to determine whether the article information includes storage condition information, if so, performing screening in accordance with the storage condition information to obtain the matching second terminal information so as to establish a binding relationship with the distribution task, and if not, performing screening to obtain any second terminal information in a state of having an available capacity, and binding the distribution task to the second terminal information.

According to one or more aspects of the disclosure, after the step of reading a grouping rule of the distribution task, the method comprises: performing screening to obtain any third terminal information in an idle state, binding the distribution task to the third terminal information, sending the distribution task and the grouping rule thereof to a third terminal corresponding to the third terminal information, and acquiring a reply of the third terminal, if the third terminal replies with confirmation information, maintaining the grouping rule of the distribution task, and if the third terminal replies with change information, replacing the grouping rule with text information of a specified area in the reply.

According to one or more aspects of the disclosure, before the step of generating a corresponding article transportation instruction, the method comprises: regularly refreshing order information corresponding to the distribution task to determine whether the order information is changed, and if so, correspondingly updating the article information bound to the distribution task, or updating the grouping rule of the distribution task in accordance with the changed order information.

According to one or more aspects of the disclosure, the step of generating a corresponding article transportation instruction comprises: using the article storage information corresponding to the set as a starting point of transportation, using the bin information bound to the set as an ending point of the transportation, and generating the corresponding article transportation instruction.

According to one or more aspects of the disclosure, the step of performing processing of corresponding articles of the set by the first terminal comprises: acquiring the corresponding article from the starting point of the transportation task by the first terminal, scanning the barcode of the article, obtaining the bin information bound to the article, and determining whether the bin information is consistent with the ending point of the transportation task, if so, transporting the article to the bin and updating the corresponding article storage information; if not, generating and outputting processing abnormality prompt information.

According to one or more aspects of the disclosure, the method further comprises: receiving full capacity prompt information sent by a second terminal bin, querying the set bound to the bin, and acquiring the article storage information corresponding to the set to thereby determine the progress of the transportation task corresponding to the set; if the progress of the transportation task is not completed, performing estimation to obtain the volume information of the remaining article information in the set so as to perform re-matching to obtain the bin information corresponding to the volume information, and binding the article information and the bin information.

In addition, the disclosure further provides an article distribution apparatus, comprising an acquisition module for acquiring a distribution task, and performing matching to obtain first terminal information and second terminal information corresponding to the distribution task; a calculation module for reading a grouping rule of the distribution task, grouping a plurality of pieces of article information bound to the distribution task to obtain a plurality of sets, and performing estimation in accordance with the article information included in each set to obtain volume information corresponding to each set; a screening module for performing screening to obtain bin information in a specified state in the second terminal information to thereby obtain capacity information corresponding to the bin information, and performing matching to obtain the capacity information corresponding to each piece of volume information so as to bind the corresponding set and the bin information; a processing module for performing querying to obtain article storage information corresponding to each set and the bin information bound thereto, generating a corresponding article transportation instruction, and sending the instruction to a first terminal corresponding to the first terminal information so as to perform processing of corresponding articles of the set by the first terminal.

Further effects of the aforesaid non-conventional optional manners will be described below in combination with specific implementation.

### BRIEF DESCRIPTION OF THE DRAWINGS

Figures, which are used for better understanding of the disclosure, do not form improper limitations on the disclosure. Where:
FIG. 1 is a schematic diagram of a main flow of an article distribution method according to a first embodiment of the disclosure;
FIG. 2 is a schematic diagram of a page display of a second terminal according to an embodiment of the disclosure;
FIG. 3 is a schematic diagram of a page display of a third terminal according to an embodiment of the disclosure;
FIG. 4 is a schematic diagram of a page display of a storage management system according to an embodiment of the disclosure;
FIG. 5 is a schematic diagram of a main flow of an article distribution method according to a second embodiment of the disclosure;
FIG. 6 is a schematic diagram of main modules of an article distribution apparatus according to an embodiment of the disclosure;
FIG. 7 is a diagram of an exemplary system architecture to which an embodiment of the disclosure may be applied;
FIG. 8 is a schematic diagram of a structure of a computer system suitable for implementing a terminal device or a server according to an embodiment of the disclosure.

### DETAILED DESCRIPTION

The exemplary embodiments of the disclosure, including various details of the embodiments of the disclosure, are described below in combination with the figures to facilitate understanding, and shall be considered to be exemplary ones only. Thus, those skilled in the art should recognize that various changes and modifications may be made to the embodiments described herein without departing from the scope and spirit of the disclosure. Similarly, for clarity and conciseness, descriptions of well-known functions and structures are omitted in the descriptions below.

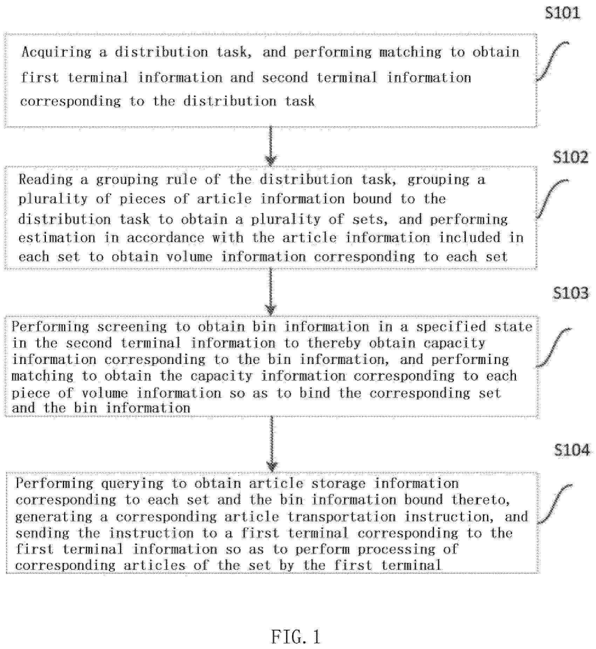

FIG. 1 is a schematic diagram of a main flow of an article distribution method according to a first embodiment of the disclosure. As shown in FIG. 1, the article distribution method comprises:
Step S101: acquiring a distribution task, and performing matching to obtain first terminal information and second terminal information corresponding to the distribution task.

In the embodiment, in order to differentially configure corresponding grouping rules in accordance with corresponding order information, the following may be performed: receiving order information, and newly creating the corresponding distribution task so as to bind a plurality of pieces of article information included in the order information to the distribution task; determining the grouping rule of the distribution task in accordance with a type identifier of the order information, if the type identifier is a preset first identifier, determining the grouping rule to be an order dimension, if the type identifier is a preset second identifier, determining the grouping rule to be an order destination dimension, if the type identifier is a preset third identifier, reading text information of a specified area in the order information as the grouping rule, and if the type identifier is a preset fourth identifier, determining the grouping rule to be an article number dimension. In this step, the grouping rule of the distribution task is correspondingly configured in accordance with the specific type of the corresponding order information, which may achieve the effect of merging the order information having the same characteristics and performing distribution processing, and may greatly increase the efficiency of article distribution.

For example, the order information with the type identifier being the preset first identifier may be an ordinary "business-to-customer" customer order with a comparatively small order quantity, so for the traditional order dimension division, it is only required that articles belonging to the same order be picked and placed into the same container; the order information with the type identifier being the preset second identifier may be a community-based group purchase order, so there is a case where a large number of orders correspond to the same destination and group purchase manager, as for this type of order information, the articles are divided in accordance with the destination dimension when being picked, and the articles with the same order destination information are picked and placed into the same container, which may maximize the efficiency of article distribution in the warehouse, and the subsequent operation of subdividing the articles in accordance with the order information is handed over to the group purchase manager of the order to complete the diversion operation of article distribution processing; the order information with the type identifier being the preset third identifier may be order information with special requirements, and the articles are picked in accordance with the grouping rule preset by the customer, which meets the customer's requirements for customized and differentiated processing of a plurality of articles in the order, and improves the customer experience; the order information with the type identifier being the preset fourth identifier may be an inbound order for clothing products, and this type of order requires products of the same style, the same color and the same size, that is, products with the same article number, be grouped in the same container so as to be stored in the same location in the warehouse, so the corresponding grouping rule is the article number dimension.

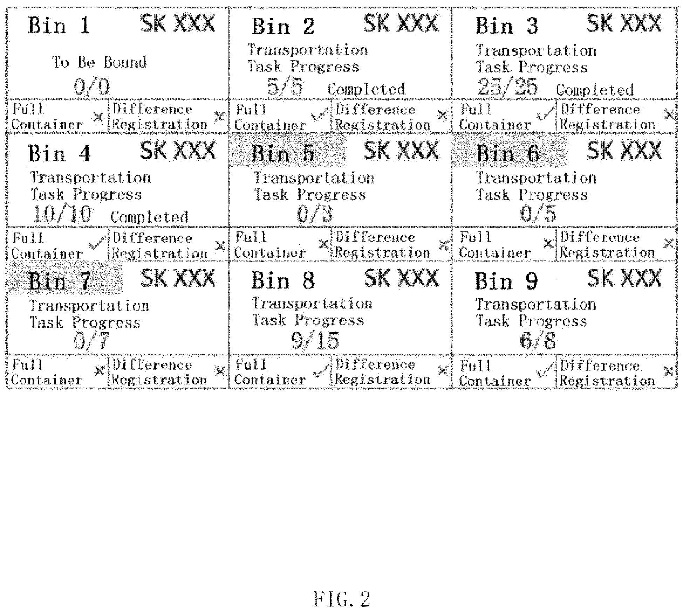

In some embodiments, in order to reduce the storage loss of the articles corresponding to the distribution task, the following may be performed: binding the distribution task to any first terminal information in an idle state; reading the article information included in the distribution task to determine whether the article information includes storage condition information, if so, performing screening in accordance with the storage condition information to obtain the matching second terminal information so as to establish a binding relationship with the distribution task, and if not, binding the distribution task to any second terminal information in a state of having an available capacity. Wherein, the first terminal is the distribution station in the warehouse, which is responsible for acquiring the articles from the designated starting point, checking the article information, and transporting the articles to the designated ending point after receiving the article transportation instruction; the second terminal is the storage cabinet in the warehouse, which includes a plurality of storage bins so as to temporarily store the articles picked from the storage address in the storage bins till the distribution processing of the corresponding order is completed. The delivery staff members of the warehouse may acquire the articles from the storage bins so as to complete the subsequent transportation and distribution processing. For example, as shown in FIG. 2, in a further embodiment, the storage cabinet in the warehouse has an interactive page display function, including but not limited to: the bin number corresponding to each bin (i.e., the "Bin X" area in the upper left corner of each bin), the SK code, also called the minimum inventory unit code (i.e., the "SK XXX" area in the upper right corner of each bin), the bin binding state (i.e., the "To Be Bound" or "Transportation Task Progress" area in the middle of each bin), the corresponding transportation task progress of the bin (i.e., the score area in the middle of each bin), the full capacity state display of the bin and the difference registration of the bin, and so on (i.e., the "Full Container" and "Difference Registration" display areas at the bottom of each bin, where the cross symbol and the check mark symbol correspond to the "Yes" and "No" states, respectively). In this step, matching is performed to obtain the second terminal corresponding to the article by determining the storage condition information of the article. For example, if the article information is fresh food, the corresponding storage information should be that refrigeration is required, and the article information should be matched with a second terminal, that is, a storage cabin, with a refrigeration and preservation function.

Step S102: reading a grouping rule of the distribution task, grouping a plurality of pieces of article information bound to the distribution task to obtain a plurality of sets, and performing estimation in accordance with the article information included in each set to obtain volume information corresponding to each set.

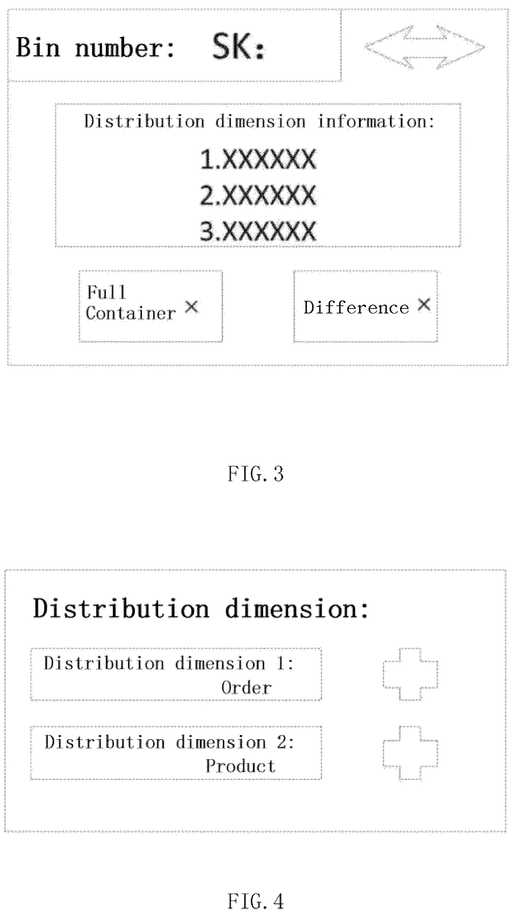

In some embodiments, in order to achieve the function of repeatedly configuring the grouping rule of the distribution task, the following may be performed: binding the distribution task to any third terminal information in an idle state, sending the distribution task and the grouping rule thereof to a third terminal corresponding to the third terminal information, and acquiring a reply of the third terminal, if the third terminal replies with confirmation information, maintaining the grouping rule of the distribution task, and if the third terminal replies with change information, replacing the grouping rule with text information of a specified area in the reply. Wherein, the third terminal may be a terminal corresponding to the distribution staff members of the warehouse so as to adjust the distribution solution of the distribution task in accordance with the actual requirements of the distribution business and the actual storage capacity of the warehouse. For example, as shown in FIG. 3, the third terminal may query the corresponding distribution dimension information by means of the bin number or SK code, the distribution dimension is just the grouping rule, the distribution dimension may be increased or decreased by clicking the "Difference" area, or the bin bound to the corresponding article set may be increased by clicking the "Full Container" area, and the cross symbol in the figure corresponds to the unclicked state. For example, in a scenario of an inbound order for clothing products, if the clothing product A and the clothing product B have a product-related sales relationship, a rule may be configured to group the clothing product A and the clothing product B in the same container so as to be subsequently stored in the same bin in the warehouse. This step expands the traditional article distribution function, meets the requirements to modify the configured grouping rule at any time, and enhances the flexibility of the article distribution solution disclosed in the disclosure.

Step S103: performing screening to obtain bin information in a specified state in the second terminal information to thereby obtain capacity information corresponding to the bin information, and performing matching to obtain the capacity information corresponding to each piece of volume information so as to bind the corresponding set and the bin information.

In the embodiment, binding the matching second terminal bin information based on the different pieces of volume information of different sets included in the distribution task may save the storage space of the second terminal, that is, the storage cabin in the warehouse, to the greatest extent to thereby reduce the overall article storage cost. Wherein, the specified state may be a state where the bin is not full or a state where the bin is empty; one or more pieces of second terminal bin information may be bound to each set in accordance with the volume information of the set.

In some embodiments, in order to achieve the effect of checking the distribution task several time, the following may be performed: regularly refreshing order information corresponding to the distribution task to determine whether the order information is changed, and if so, correspondingly updating the article information bound to the distribution task, or updating the grouping rule of the distribution task in accordance with the changed order information.

Step S104: performing querying to obtain article storage information corresponding to each set and the bin information bound thereto, generating a corresponding article transportation instruction, and sending the instruction to a first terminal corresponding to the first terminal information so as to perform processing of corresponding articles of the set by the first terminal.

In some embodiments, a corresponding article transportation instruction is generated, and the specific operation comprises: using the article storage information corresponding to the set as a starting point of transportation, using the bin information bound to the set as an ending point of the transportation, and generating the corresponding article transportation instruction. After the completion of the virtual grouping and allocation of the article information corresponding to the distribution task, a corresponding instruction is generated and sent to the first terminal so as to complete the actual distribution operation of the article corresponding to the article information. As shown in FIG. 2, if the distribution task is bound to Bins 5, 6 and 7, the lights of the corresponding bins are lit to prompt the corresponding first terminal to perform the distribution processing.

In some embodiments, the specific operation of performing processing of corresponding articles of the set by the first terminal comprises: acquiring the corresponding article from the starting point of the transportation task by the first terminal, scanning the barcode of the article, obtaining the bin information bound to the article, and determining whether the bin information is consistent with the ending point of the transportation task, if so, transporting the article to the bin and updating the corresponding article storage information; if not, generating and outputting processing abnormality prompt information. In response to the update of the storage information of the articles included in the set, the progress of the transportation instruction corresponding to the set is increased, as shown in FIG. 2, and then the progress value of the transportation task displayed in the corresponding area of the bin is updated. If the maximum progress value is reached, the word "Completed" is displayed in the corresponding display area of the bin, as shown in Bins 2, 3 and 4 in the figure.

In some embodiments, in order to avoid the misplacement, loss, or damage of articles due to inaccurate estimation of the volume information of the set and to timely adjust the second terminal bin information corresponding to the set, the following may be performed: receiving full capacity prompt information sent by a second terminal bin, querying the set bound to the bin, and acquiring the article storage information corresponding to the set to thereby determine the progress of the transportation task corresponding to the set; if the progress of the transportation task is not completed, performing estimation to obtain the volume information of the remaining article information in the set so as to perform re-matching to obtain the bin information corresponding to the volume information, and binding the article information and the bin information. For example, the page display diagram of the storage management system page corresponding to the warehouse is as shown in FIG. 4, which records a plurality of distribution rules corresponding to the articles (the distribution dimensions are in an "and" relationship), and the distribution rules are modified by means of the click area on the right.

In a further embodiment, in order to recheck the set subjected to the distribution processing, the distribution staff members of the warehouse may check the respective bins again after the completion of the processing of the first terminal so as to determine one by one whether the information of the articles actually stored in each bin is consistent with the article information recorded in the storage management system, and determine whether each article is intact, and if not, the difference registration is performed. As shown in FIG. 2, the "Difference Registration" area in the lower right corner of the bin may be clicked for processing (the cross symbol in the figure corresponds to the processing state without the difference registration).

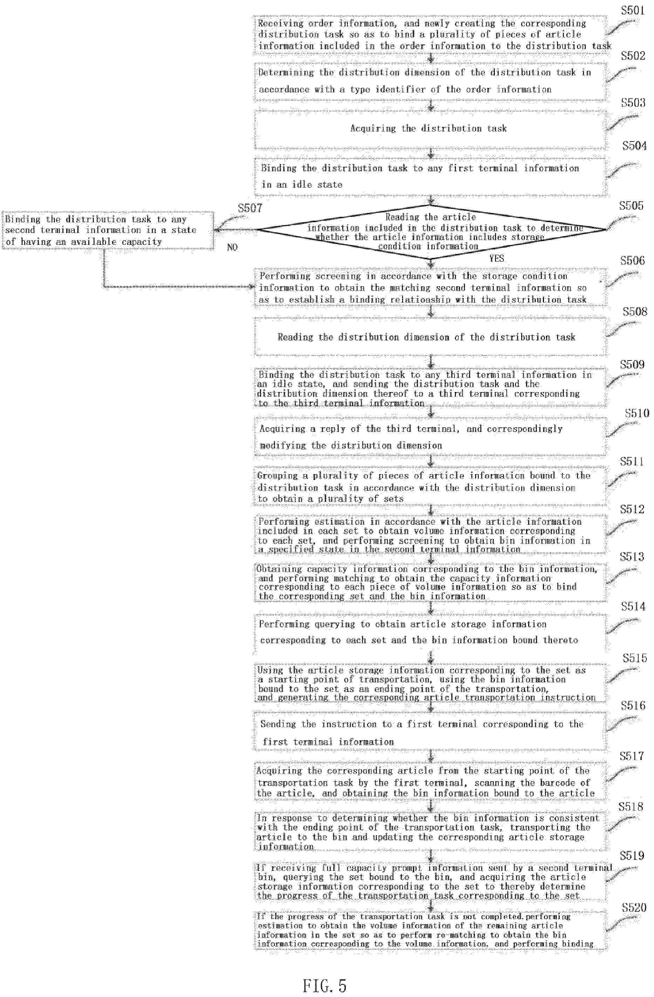

FIG. 5 is a schematic diagram of a main flow of an article distribution method according to a second embodiment of the disclosure, where the article distribution method comprises:
Step S501: receiving order information, and newly creating the corresponding distribution task so as to bind a plurality of pieces of article information included in the order information to the distribution task.

Step S502: determining the grouping rule of the distribution task in accordance with a type identifier of the order information.

Preferably, if the type identifier is a preset first identifier, the grouping rule is determined to be an order dimension; if the type identifier is a preset second identifier, the grouping rule is determined to be an order destination dimension; if the type identifier is a preset third identifier, text information of a specified area in the order information is read as the grouping rule; if the type identifier is a preset fourth identifier, the grouping rule is determined to be an article number dimension.

Step S503: acquiring the distribution task.

Step S504: binding the distribution task to any first terminal information in an idle state.

Step S505: reading the article information included in the distribution task to determine whether the article information includes storage condition information. If so, the step S506 is performed, and if not, the step S507 is performed.

Step S506: performing screening in accordance with the storage condition information to obtain the matching second terminal information so as to establish a binding relationship with the distribution task.

Step S507: binding the distribution task to any second terminal information in a state of having an available capacity.

Step S508: reading a grouping rule of the distribution task.

Step S509: binding the distribution task to any third terminal information in an idle state, and sending the distribution task and the grouping rule thereof to a third terminal corresponding to the third terminal information.

Step S510: acquiring a reply of the third terminal, and correspondingly modifying the grouping rule.

Step S511: grouping a plurality of pieces of article information bound to the distribution task in accordance with the grouping rule to obtain a plurality of sets.

Step S512: performing estimation in accordance with the article information included in each set to obtain volume information corresponding to each set, and performing screening to obtain bin information in a specified state in the second terminal information.

Step S513: obtaining capacity information corresponding to the bin information, and performing matching to obtain the capacity information corresponding to each piece of volume information so as to bind the corresponding set and the bin information.

Step S514: performing querying to obtain article storage information corresponding to each set and the bin information bound thereto.

Step S515: using the article storage information corresponding to the set as a starting point of transportation, using the bin information bound to the set as an ending point of the transportation, and generating the corresponding article transportation instruction.

Step S516: sending the instruction to a first terminal corresponding to the first terminal information.

Step S517: acquiring the corresponding article from the starting point of the transportation task by the first terminal, scanning the barcode of the article, and obtaining the bin information bound to the article.

Step S518: in response to determining that the bin information is consistent with the ending point of the transportation task, transporting the article to the bin and updating the corresponding article storage information.

Preferably, in response to determining that the bin information is not consistent with the ending point of the transportation task, processing abnormality prompt information is generated and output.

Step S519: if receiving full capacity prompt information sent by a second terminal bin, querying the set bound to the bin, and acquiring the article storage information corresponding to the set to thereby determine the progress of the transportation task corresponding to the set.

Step S520: if the progress of the transportation task is not completed, performing estimation to obtain the volume information of the remaining article information in the set so as to perform re-matching to obtain the bin information corresponding to the volume information, and performing binding.

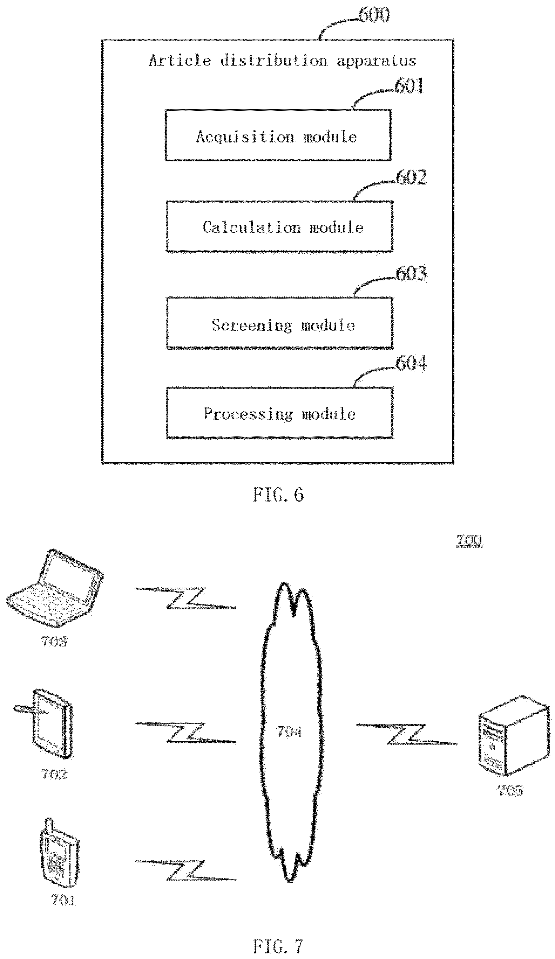

FIG. 6 is a schematic diagram of main modules of an article distribution apparatus according to an embodiment of the disclosure. As shown in FIG. 6, the article distribution apparatus 600 comprises: an acquisition module 601, a calculation module 602, a screening module 603 and a processing module 604. Wherein, the acquisition module 601 is used for acquiring a distribution task, and performing matching to obtain first terminal information and second terminal information corresponding to the distribution task; the calculation module 602 is used for reading a grouping rule of the distribution task, grouping a plurality of pieces of article information bound to the distribution task to obtain a plurality of sets, and performing estimation in accordance with the article information included in each set to obtain volume information corresponding to each set; the screening module 603 is used for performing screening to obtain bin information in a specified state in the second terminal information to thereby obtain capacity information corresponding to the bin information, and performing matching to obtain the capacity information corresponding to each piece of volume information so as to bind the corresponding set and the bin information; the processing module 604 is used for performing querying to obtain article storage information corresponding to each set and the bin information bound thereto, generating a corresponding article transportation instruction, and sending the instruction to a first terminal corresponding to the first terminal information so as to perform processing of corresponding articles of the set by the first terminal.

In some embodiments, the acquisition module 601 is further used for: before acquiring a distribution task, receiving order information, and newly creating the corresponding distribution task so as to bind a plurality of pieces of article information corresponding to the order information to the distribution task; determining the grouping rule of the distribution task in accordance with a type identifier of the order information, if the type identifier is a preset first identifier, determining the grouping rule to be an order dimension, if the type identifier is a preset second identifier, determining the grouping rule to be an order destination dimension, if the type identifier is a preset third identifier, reading text information of a specified area in the order information as the grouping rule, and if the type identifier is a preset fourth identifier, determining the grouping rule to be an article number dimension.

In some embodiments, the acquisition module 601 is further used for: when performing matching to obtain first terminal information and second terminal information corresponding to the distribution task, performing screening to obtain any first terminal information in an idle state, and binding the distribution task to the first terminal information; reading the article information included in the distribution task to determine whether the article information includes storage condition information, if so, performing screening in accordance with the storage condition information to obtain the matching second terminal information so as to establish a binding relationship with the distribution task, and if not, performing screening to obtain any second terminal information in a state of having an available capacity, and binding the distribution task to the second terminal information.

In some embodiments, the calculation module 602 is further used for: after reading a grouping rule of the distribution task, performing screening to obtain any third terminal information in an idle state, binding the distribution task to the third terminal information, sending the distribution task and the grouping rule thereof to a third terminal corresponding to the third terminal information, and acquiring a reply of the third terminal, if the third terminal replies with confirmation information, maintaining the grouping rule of the distribution task, and if the third terminal replies with change information, replacing the grouping rule with text information of a specified area in the reply.

In some embodiments, the processing module 604 is further used for: before generating a corresponding article transportation instruction, regularly refreshing order information corresponding to the distribution task to determine whether the order information is changed, and if so, correspondingly updating the article information bound to the distribution task, or updating the grouping rule of the distribution task in accordance with the changed order information.

In some embodiments, the processing module 604 is further used for: when generating a corresponding article transportation instruction, using the article storage information corresponding to the set as a starting point of transportation, using the bin information bound to the set as an ending point of the transportation, and generating the corresponding article transportation instruction.

In some embodiments, the processing module 604 is further used for: when performing processing of corresponding articles of the set by the first terminal, acquiring the corresponding article from the starting point of the transportation task by the first terminal, scanning the barcode of the article, obtaining the bin information bound to the article, and determining whether the bin information is consistent with the ending point of the transportation task, if so, transporting the article to the bin and updating the corresponding article storage information; if not, generating and outputting processing abnormality prompt information.

In some embodiments, the processing module 604 is further used for: receiving full capacity prompt information sent by a second terminal bin, querying the set bound to the bin, and acquiring the article storage information corresponding to the set to thereby determine the progress of the transportation task corresponding to the set; if the progress of the transportation task is not completed, performing estimation to obtain the volume information of the remaining article information in the set so as to perform re-matching to obtain the bin information corresponding to the volume information, and binding the article information and the bin information.

It should be noted that the article distribution method and the article distribution apparatus described in the disclosure have a corresponding relationship in terms of specific implementation contents, so the repeated contents will not be described again.

FIG. 7 shows an exemplary system architecture 700 to which an article distribution method or an article distribution apparatus according to an embodiment of the disclosure may be applied.

As shown in FIG. 7, the system architecture 700 may comprise terminal devices 701, 702 and 703, a network 704, and a server 705. The network 704 is a medium for providing a communication link between the terminal devices 701, 702 and 703 and the server 705. The network 704 may include various connection types, such as wired or wireless communication links, or fiber-optic cables.

The user may use the terminal devices 701, 702 and 703 to interact with the server 705 through the network 704 to receive or send messages and so on. Various communication client applications may be installed on the terminal devices 701, 702 and 703.

The terminal devices 701, 702 and 703 may be various electronic devices having article distribution screens and supporting webpage browsing, including but not limited to smart phones, tablet computers, laptop portable computers, desktop computers, and so on.

The sever 705 may be a server that provides various services, such as a backend management server (only an example) that provides support for users using the terminal devices 701, 702 and 703. The backend management server may process, for example, analyze the received request for querying product information and other data, and feed the processing results (such as target push information and product information--only examples) back to the terminal devices.

It shall be noted that the article distribution method provided by the embodiment of the disclosure is generally performed by the server 705, and correspondingly, the calculation apparatus is generally provided in the server 705.

It should be understood that the numbers of the terminal devices, the networks, and the servers in FIG. 7 are merely schematic. According to implementation requirements, there may be any numbers of terminal devices, networks, and servers.

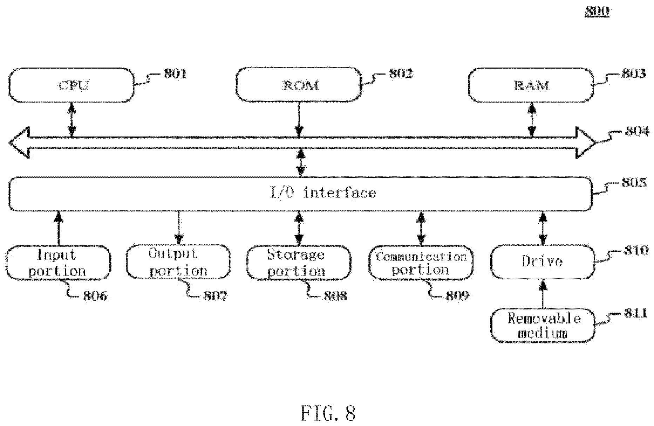

Reference is now made to FIG. 8, which shows a schematic diagram of a structure of a computer system 800 suitable for implementing a terminal device according to an embodiment of the disclosure. The terminal device shown in FIG. 8 is only an example, and shall not impose any limitation on the functions and the scope of use of the embodiment of the disclosure.

As shown in FIG. 8, the computer system 800 includes a central processing unit (CPU) 801, which may perform various appropriate actions and processing according to a program stored in a read-only memory (ROM) 802 or a program loaded from a storage portion 808 into a random access memory (RAM) 803. Various programs and data required for the operation of the system 800 are also stored in the RAM 803. The CPU 801, the ROM 802 and the RAM 803 are connected to each other through a bus 804. An input/output (I/O) interface 805 is also connected to the bus 804.

The following components are connected to the I/O interface 805: an input portion 806 including a keyboard, a mouse, and so on; an output portion 807 including a cathode ray tube (CRT), a liquid crystal display (LCD) and so on, and a speaker and so on; a storage portion 808 including a hard disk and so on; and a communication portion 809 including a network interface card such as a LAN card, a modem, and so on. The communication portion 809 performs communication processing via a network such as the Internet. A drive 810 is also connected to the I/O interface 805 according to requirements. A removable medium 811, such as a magnetic disk, an optical disk, a magneto-optical disk, a semiconductor memory, and so on, is installed on the drive 810 according to requirements so that a computer program read therefrom is installed in the storage portion 808 according to requirements.

In particular, according to the embodiment of the disclosure, the process described above with reference to the flowchart may be implemented as a computer software program. For example, the embodiment of the disclosure includes a computer program product, which includes a computer program carried on a computer-readable medium, the computer program containing a program code for performing the method shown in the flowchart. In such embodiment, the computer program may be downloaded and installed from the network through the communication portion 809, and/or installed from the removable medium 811. When the computer program is executed by the central processing unit (CPU) 801, the aforesaid functions defined in the system according to the disclosure are executed.

It shall be noted that the computer-readable medium shown in the disclosure may be a computer-readable signal medium or a computer-readable storage medium or any combination of both. The computer-readable storage medium may be, for example, but not limited to, an electronic, magnetic, optical, electromagnetic, infrared, or semiconductor system, apparatus or device, or any combination thereof. More specific examples of the computer-readable storage medium may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the disclosure, the computer-readable storage medium may be any tangible medium containing or storing a program, and the program may be used by or in combination with an instruction execution system, apparatus or device. In the disclosure, the computer-readable signal medium may include a data signal propagated in a baseband or propagated as a part of a carrier wave, in which a computer-readable program code is carried. Such propagated data signal may adopt multiple forms, including but not limited to electromagnetic signals, optical signals, or any suitable combination thereof. The computer-readable signal medium may be also any computer-readable medium other than the computer-readable storage medium, and the computer-readable medium may send, propagate, or transmit a program used by or in combination with the instruction execution system, apparatus or device. The program code contained on the computer-readable medium may be transmitted using any appropriate medium, including but not limited to wireless, wire, optical cable, RF, and so on, or any suitable combination thereof.

The flowcharts and block diagrams in the figures illustrate architectures, functions and operations that may be implemented by systems, methods and computer program products according to various embodiments of the disclosure. In this regard, each block in the flowcharts or block diagrams may represent a module, a program segment, or a part of a code, which contains one or more executable instructions for implementing specified logic functions. It shall be also noted that in some alternative implementations, the functions labeled in the blocks may also occur in an order different from that labeled in the figures. For example, two successively represented blocks may actually be executed substantially in parallel, and they may sometimes be executed in a reverse order, which depends on the functions involved. It shall be also noted that each block in the block diagrams or flowcharts, and combinations of the blocks in the block diagrams or flowcharts may be implemented with a dedicated hardware-based system that performs specified functions or operations, or may be implemented with a combination of dedicated hardware and computer instructions.

The involved modules described in the embodiment of the disclosure may be implemented by software or hardware. The described modules may be also provided in a processor. For example, descriptions may be made as follows: a processor comprising an acquisition module, a calculation module, a screening module, and a processing module. The names of these modules do not form limitations of the modules themselves in some cases.

As another aspect, the disclosure also provides a computer-readable medium, which may be included in the devices described in the aforesaid embodiment, or may exist independently without being assembled into the devices. The aforesaid computer-readable medium carries one or more programs, and the one or more programs, when executed by one of the devices, cause the device to include: acquiring a distribution task, and performing matching to obtain first terminal information and second terminal information corresponding to the distribution task; reading a grouping rule of the distribution task, grouping a plurality of pieces of article information bound to the distribution task to obtain a plurality of sets, and performing estimation in accordance with the article information included in each set to obtain volume information corresponding to each set; performing screening to obtain bin information in a specified state in the second terminal information to thereby obtain capacity information corresponding to the bin information, and performing matching to obtain the capacity information corresponding to each piece of volume information so as to bind the corresponding set and the bin information; performing querying to obtain article storage information corresponding to each set and the bin information bound thereto, generating a corresponding article transportation instruction, and sending the instruction to a first terminal corresponding to the first terminal information so as to perform processing of corresponding articles of the set by the first terminal.

One embodiment in the aforesaid invention has the following advantages and beneficial effects: in the invention, a process of configuring differentiated grouping rules for different types of orders is implemented, and the effect of performing diversified processing of multiple types of orders is achieved by creating a corresponding distribution task in accordance with the received order information, and determining the grouping rule of the distribution task, that is, the distribution dimension, in accordance with the type identifier of the order information; an damage to the articles during storage and distribution is avoided by binding the distribution task to the matching first terminal information and second terminal information, and considering the storage requirements of the articles corresponding to the distribution task; meanwhile, the effect of confirming that the grouping rule of the distribution task is adapted to the actual situation of the warehouse is achieved by reading the grouping rule of the distribution task and sending it to any idle third terminal to check the grouping rule; furthermore, a plurality of pieces of article information bound to the distribution task are grouped to obtain a plurality of sets, estimation is performed in accordance with the article information included in each set to obtain volume information corresponding to each set, the volume information and the capacity information of the second terminal bin are matched, and the set and the matching second terminal bin information are bound, and the configuration layout of the second terminal bin is completed in accordance with the distribution task, which reduces the difficulty of the subsequent transmission processing of the articles and enhances the practicality of the invention; in addition, generation of the operation instruction in accordance with article distribution results is completed by generating an article transportation instruction corresponding to each set, and sending the instruction to a first terminal corresponding to the first terminal information so as to perform processing of corresponding articles of the set by the first terminal, and the operation instruction is passed on to the next node.

The technical problems that the existing article distribution method can hardly be configured and has low flexibility can be solved in accordance with the technical solutions of the embodiments of the disclosure.

The aforesaid specific implementation modes do not form limitations on the scope of protection of the disclosure. It shall be understood by those skilled in the art that various modifications, combinations, sub-combinations and substitutions may occur depending on design requirements and other factors. Any modification, equivalent replacement, improvement, and so on made within the spirit and principle of the disclosure shall be included in the scope of protection of the disclosure.

## Claims

1. An article distribution method, comprising:
acquiring a distribution task, and performing matching to obtain first terminal information and second terminal information corresponding to the distribution task;
reading a grouping rule of the distribution task, grouping a plurality of pieces of article information bound to the distribution task to obtain a plurality of sets, and performing estimation in accordance with the article information included in each set to obtain volume information corresponding to each set;
performing screening to obtain bin information in a specified state in the second terminal information to thereby obtain capacity information corresponding to the bin information, and performing matching to obtain the capacity information corresponding to each piece of volume information so as to bind the corresponding set and the bin information;
performing querying to obtain article storage information corresponding to each set and the bin information bound thereto, generating a corresponding article transportation instruction, and sending the instruction to a first terminal corresponding to the first terminal information so as to perform processing of corresponding articles of the set by the first terminal.

2. The method according to claim 1, wherein, before acquiring a distribution task, the method comprises:
receiving order information, and newly creating the corresponding distribution task so as to bind a plurality of pieces of article information corresponding to the order information to the distribution task;
determining the grouping rule of the distribution task in accordance with a type identifier of the order information,
if the type identifier is a preset first identifier, determining the grouping rule to be an order dimension,
if the type identifier is a preset second identifier, determining the grouping rule to be an order destination dimension,
if the type identifier is a preset third identifier, reading text information of a specified area in the order information as the grouping rule, and
if the type identifier is a preset fourth identifier, determining the grouping rule to be an article number dimension.

3. The method according to claim 1, wherein, performing matching to obtain the first terminal information and the second terminal information corresponding to the distribution task comprises:
performing screening to obtain any first terminal information in an idle state, and binding the distribution task to the first terminal information;
reading the article information included in the distribution task to determine whether the article information includes storage condition information,
if so, performing screening in accordance with the storage condition information to obtain the matching second terminal information so as to establish a binding relationship with the distribution task, and
if not, performing screening to obtain any second terminal information in a state of having an available capacity, and binding the distribution task to the second terminal information.

4. The method according to claim 1, wherein, after reading a grouping rule of the distribution task, the method comprises:
performing screening to obtain any third terminal information in an idle state, binding the distribution task to the third terminal information, sending the distribution task and the grouping rule thereof to a third terminal corresponding to the third terminal information, and acquiring a reply of the third terminal,
if the third terminal replies with confirmation information, maintaining the grouping rule of the distribution task, and
if the third terminal replies with change information, replacing the grouping rule with text information of a specified area in the reply.

5. The method according to claim 1, wherein, before generating a corresponding article transportation instruction, the method comprises:
regularly refreshing order information corresponding to the distribution task to determine whether the order information is changed, and if so, correspondingly updating the article information bound to the distribution task, or updating the grouping rule of the distribution task in accordance with the changed order information.

6. The method according to claim 1, wherein, generating a corresponding article transportation instruction comprises:
using the article storage information corresponding to the set as a starting point of transportation,
using the bin information bound to the set as an ending point of the transportation, and generating the corresponding article transportation instruction.

7. The method according to claim 1, wherein, performing processing of corresponding articles of the set by the first terminal comprises:
acquiring the corresponding article from the starting point of the transportation task by the first terminal, scanning the barcode of the article, obtaining the bin information bound to the article, and
determining whether the bin information is consistent with the ending point of the transportation task, if so, transporting the article to the bin and updating the corresponding article storage information;
if not, generating and outputting processing abnormality prompt information.

8. The method according to claim 7, wherein, the method comprises:
receiving full capacity prompt information sent by a second terminal bin, querying the set bound to the bin, and acquiring the article storage information corresponding to the set to thereby determine the progress of the transportation task corresponding to the set;
if the progress of the transportation task is not completed, performing estimation to obtain the volume information of the remaining article information in the set so as to perform re-matching to obtain the bin information corresponding to the volume information, and binding the article information and the bin information.

9. An article distribution apparatus, comprising:
an acquisition module for acquiring a distribution task, and performing matching to obtain first terminal information and second terminal information corresponding to the distribution task;
a calculation module for reading a grouping rule of the distribution task, grouping a plurality of pieces of article information bound to the distribution task to obtain a plurality of sets, and performing estimation in accordance with the article information included in each set to obtain volume information corresponding to each set;
a screening module for performing screening to obtain bin information in a specified state in the second terminal information to thereby obtain capacity information corresponding to the bin information, and performing matching to obtain the capacity information corresponding to each piece of volume information so as to bind the corresponding set and the bin information;
a processing module for performing querying to obtain article storage information corresponding to each set and the bin information bound thereto, generating a corresponding article transportation instruction, and sending the instruction to a first terminal corresponding to the first terminal information so as to perform processing of corresponding articles of the set by the first terminal.

10. An electronic device, comprising:
one or more processors;
a storage means for storing one or more programs,
the one or more programs, when executed by the one or more processors, causing the one or more processors to implement the method according to any of claims 1to 8.

11. A computer-readable medium having a computer program stored thereon, which, when executed by a processor, implements the method according to any of claims 1 to 8.
